# EUROPÄISCHE PATENTSCHRIFT

(11) **EP 2 446 164 B1**
(45) Veröffentlichungstag und Bekanntmachung des Hinweises auf die Patenterteilung: **12.06.2013**
(21) Anmeldenummer: 10723610.1
(22) Anmeldetag: 16.06.2010
(51) Int. Cl.: F16D 51/20, F16D 65/09

(54) **VORRICHTUNG ZUR LAGERUNG VON BREMSBACKEN EINER TROMMELBREMSE**
DEVICE FOR SUPPORTING BRAKE SHOES OF A DRUM BRAKE
DISPOSITIF POUR LE MONTAGE DES MÂCHOIRES D'UN FREIN À TAMBOUR

(30) Priorität: 22.06.2009 DE 102009027081
(43) Veröffentlichungstag der Anmeldung: 02.05.2012
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner
(86) Internationale Anmeldenummer: PCT/EP2010/058455
(87) Internationale Veröffentlichungsnummer: WO 2010/149553

(56) Entgegenhaltungen:
- EP-A1- 0 482 567
- DE-U1- 29 704 700
- ES-A6- 2 002 878
- GB-A- 1 007 804

## Beschreibung

Die vorliegende Erfindung bezieht sich auf eine Trommelbremse eines Fahrzeugs, insbesondere eines Nutzfahrzeugs oder einer Landmaschine.

Trommelbremsen der in Rede stehenden Art sind aus dem Stand der Technik bekannt. So ist beispielsweise aus der DE 88 06 286 U eine Trommelbremse bekannt, deren Bremsbelagträger mittels zylindrischer Lagerbolzen in einer Ebene schwenkbar an dem Bremsträger angebracht ist. Eine derartige Lagerung verlangt jedoch einen verhältnismäßig großen Herstellungs- und Montageaufwand mit Spezialwerkzeugen. Bei Betätigung der Bremse werden die Bremsbeläge, die auf den Bremsbelagträgern befestigt sind, gegen die Innenseite der Bremstrommel gedrückt. Durch den Druck wird die Bremstrommel radial aufgeweitet, wobei diese Aufweitung in axialer Richtung bzw. Längsrichtung der Achse nicht konstant ist, sondern zur offenen Seite der Bremstrommel hin zunimmt, was zu einer ungleichmäßigen Anlage der Bremsbacken an der Innenfläche der Bremstrommel sowie einer entsprechend ungleichmäßigen Verteilung des Anpressdrupks und damit zu einer Verschlechterung der Bremsleistung führt. Aus der gattungsbildenden EP 0 482 567 A1 ist eine Bremsbackenlagerung für Fahrzeugtrommelbremsen bekannt, bei welcher die Bremsbelagträger mittels Kugeln im Raum frei schwenkbar an dem Bremsträger angebracht sind. Um die Bremsbelagträger in einer vorgegebenen Bahn zu führen, ist bei dieser Vorrichtung eine komplexe Führung über eine Nockenanordnung notwendig, sodass eine derartige Lagerung einen verhältnismäßig großen Herstellungs- und Montageaufwand mit Spezialwerkzeugen verlangt.

Es ist somit Aufgabe der vorliegenden Erfindung, eine Trommelbremse eines Fahrzeugs, insbesondere eines Nutzfahrzeugs oder einer Landmaschine, vorzusehen, die die oben genannten Nachteile überwindet und insbesondere eine einfach montierbare und kostengünstig herstellbare Lagerung der Bremsbacken ermöglicht, deren Verlagerungsweg während des Bremsvorgangs einfach vorbestimmbar ist.

Diese Aufgabe wird durch eine Trommelbremse eines Fahrzeugs, insbesondere eines Nutzfahrzeugs oder einer Landmaschine, mit den Merkmalen des Anspruchs 1 gelöst. Bevorzugte Ausführungsformen sind Gegenstand der abhängigen Ansprüche.

Die erfindungsgemäße Trommelbremse findet insbesondere Anwendung in Nutzfahrzeugen oder Landmaschinen, wie beispielsweise Lastkraftwagen oder von diesen gezogenen Sattelanhängern, die ausgelegt sind, schwere Lasten zu transportieren, sodass - anders als bei Personenkraftwagen - die Trommelbremse eine sehr hohe Bremswirkung erzielen muss. Der Bremsträger ist bei derartigen Fahrzeugsystemen im Wesentlichen mit einer starren bzw. nicht drehenden Achse fest verbunden, sodass Bremsmomente vom Bremsbelagträger in den Bremsträger eingeleitet werden und über die Festlegung bzw. Befestigung an der Achse bzw. dem Achskörper in den Rahmen des Fahrzeugs eingeleitete werden können. In anderen Worten bilden Bremsträger, Achskörper und Rahmen des Fahrzeugs eine Einheit aus, die - bezogen auf den Radmittelpunkt - im Wesentlichen nicht zueinander drehbar ist. Der Bremsbelagträger weist an seiner Außenoberfläche einen Bremsbelag auf, wobei die geometrische Außenkonfiguration im Wesentlichen der Innenkonfiguration der Bremstrommel entspricht. Über zumindest einen Lagerkörper ist der Bremsbelagträger an dem Bremsträger derart angeordnet, dass dieser entlang einer Schwenkebene verschwenkbar ist, damit sich die Bremsbelagträger an den Innenumfang der Bremstrommel zum Bremsen anlegen können. Lagerkörper und Bremsträger bzw. Bremsbelagträger sind somit als separate Elemente ausgebildet und somit zweckmäßigerweise nicht einstückig miteinander ausgebildet. Um die zur offenen Seite der Bremstrommel hin zunehmende Aufweitung derselben zu kompensieren, ist die Neigung der Schwenkebene des Bremsbelagträgers in Bezug zum Bremsträger veränderlich. In anderen Worten kann der Bremsbelagträger zusätzlich über eine in der Schwenkebene liegende Achse verschwenkt bzw. gekippt werden. Infolgedessen, da der Bremsbelagträger entlang einer Schwenkebene verschwenkbar ist, deren Neigung zum Bremsträger veränderlich ist, wird der Bremsbelagträger derart geführt, dass dieser sich entlang von zwei Freiheitsgraden bewegen kann. Anders als bei einer Lagerung mittels eines als Kugel ausgeführten Lagerkörpers, bei welchem sich der Bremsbelagträger vollkommen frei im Raum (d. h. drei Freiheitsgrade) bewegen kann, ist durch die erfindungsgemäße Trommelbremse keine weitere Führung des Bremsbelagträger notwendig. Dies wird bezweckt, indem die Schwenkachse des Bremsbelagträgers im Wesentlichen parallel zur Lagerachse bzw. Längsachse bzw. Rotationsachse des Achselements bzw. der Trommelbremse liegen kann oder hierzu geneigt sein kann. Die Neigung kann hierbei in einem Winkel bis etwa 10°, vorzugsweise bis etwa 6° und besonders vorzugsweise bis etwa 3° erfolgen. Um eine Rotation des Bremsbelagträgers relativ zum Bremsträger entlang der Schwenkebene zu ermöglichen, weist der Lagerkörper eine um dessen Lagerachse bzw. Längsachse bzw. Rotationsachse rotationssymmetrische Lagerfläche auf. Der Lagerkörper weist an seinen Stirnseiten Befestigungsbereiche auf, um diesen am Bremsträger oder Bremsbelagträger anzuordnen. Die Anordnung kann hierbei derart erfolgen, dass der Lagerkörper am Bremsträger oder Bremsbelagträger fest bzw. unbeweglich oder rotierbar bzw. beweglich angeordnet ist. Bei einer unbeweglichen Anordnung am Bremsträger oder Bremsbelagträger übernimmt der Lagerkörper im Wesentlichen die Funktion einer Gleitlagerung. Bei einer beweglichen Anordnung wirkt der Lagerkörper im Wesentlichen als Wälzlager. Die Lagerfläche des Lagerkörpers ist zweckmäßigerweise diejenige Oberfläche, die eine Kontaktfläche mit dem Bremsträger bzw. Bremsbelagträger ausbildet. Besonders vorteilhaft findet bei Aktivierung der Bremse aufgrund des Reibwerts keine Relativbewegung zwischen dem Lagerkörper und dem Bremsbelagträger statt, so dass diese fest bzw. unbeweglich zueinander angeordnet sind und folglich der Verschleiß in diesem Bereich minimiert wird. Der Lagerkörper ist daher vorzugsweise rotierbar bzw. beweglich zu dem Bremsträger angeordnet, so dass diese zueinander rotieren können. Die Befestigungsbereiche des Lagerkörpers sind an im Wesentlichen gegenüberliegenden Stirnseiten des Lagerkörpers vorgesehen, die vorzugsweise im Wesentlichen auf der Längsachse bzw. Rotationsachse des Lagerkörpers liegen. Hierbei sind die Befestigungsbereiche bzw. Stirnseiten des Lagerkörpers hinsichtlich ihrer Oberflächenkonfiguration anders als die Lagerfläche ausgebildet, um eine Befestigung bzw. Fixierung des Lagerkörpers zu ermöglichen.

Vorteilhafterweise ist der Lagerkörper als Tonnenkörper bzw. tonnenförmige oder ballige Rolle ausgebildet. In anderen Worten ist der Lagerkörper nicht als Zylinder bzw. Körper mit einem entlang dessen Längsachse konstantem Querschnitt ausgebildet, sondern als Körper, der in geometrischer Hinsicht durch Rotation eines Kreisbogens oder einer Parabel um eine Längsachse bzw. Lagerachse erzeugt ist. Hierdurch ergibt sich entlang der Längsachse ein nicht konstanter Querschnittsverlauf. Die zweckmäßigerweise im Wesentlichen gegenüberliegenden Stirnseiten des Lagerkörpers sind vorteilhafterweise flach ausgebildet. Besonders zweckmäßigerweise können die Stirnseiten konkav ausgebildet sein, um den Lagerkörper besonders einfach zu befestigen.

Vorzugsweise weist die Lagerfläche des Lagerkörpers eine im Wesentlichen konstante Krümmung auf. In anderen Worten kann der beispielsweise als Tonnenkörper ausgebildete Lagerkörper entlang der Lagerfläche eine im Wesentlichen konstante Krümmung aufweisen, die lediglich durch Fertigungstoleranzen variabel gestaltet ist.

Alternativ hierzu kann die Lagerfläche des Lagerkörpers einen Schwenkradius aufweisen, welcher vom Ballungsradius der Lagerfläche verschiedenen ist. Der Schwenkradius ist hierbei im Wesentlichen die Krümmung der Lagerfläche des Lagerkörpers entlang einer Schwenkebene. Entsprechend ist der Ballungsradius die Krümmung der Lagerfläche des Lagerkörpers entlang einer Ebene, auf welcher die Längsachse bzw. Rotationsachse des Lagerkörpers liegt. In anderen Worten ist die Lagerfläche des Lagerkörpers vorzugsweise entlang einer Schwenkebene stärker gekrümmt als entlang einer auf der Rotationsachse des Lagerkörpers liegenden Ebene. Durch eine derartige Konfiguration wird sichergestellt, dass sich der Bremsbelagträger aufgrund der Lagerung über den Lagerkörper nur innerhalb von zwei Freiheitsgraden bewegen kann und nicht frei im Raum (d. h. drei Freiheitsgrade), wie dies bei einer Lagerung über eine Kugel möglich wäre. Daher ist eine zusätzliche komplexe Führung des Bremsbelagträgers nicht erforderlich.

Vorzugsweise weist die Lagerfläche des Lagerkörpers einen Schwenkradius auf, der kleiner als der Ballungsradius der Lagerfläche ist. Aufgrund des größeren Ballungsradius bzw. der geringeren Krümmung der Lagerfläche des Lagerkörpers entlang einer auf der Rotationsachse des Lagerkörpers liegenden Ebene kann die Flächenpressung bzw. Hertzsche Pressung zwischen Lagerkörper und Bremsbelagträger bzw. Bremsträger zusätzlich im Vergleich zu einer sphärischen Oberfläche bzw. Kugel reduziert werden, sodass die Auslegung der Komponenten vereinfacht und die Lebensdauer der Bauteile im Lagerbereich erhöht werden kann.

Zweckmäßigerweise liegt das Verhältnis Ballungsradius zu Schwenkradius der Lagerfläche des Lagerkörpers zwischen etwa 0,1 - 0,9, vorzugsweise etwa 0,4 - 0,6 und besonders vorzugsweise etwa 0,5. Durch ein derartiges Verhältnis wird ein besonders vorteilhafter Kompromiss zwischen Reduzierung der Flächenpressung und Schwenk- sowie Ballungsradius der Lagerfläche und somit Verschwenkung des Bremsbelagträgers erzielt, wodurch die Funktionalität der erfindungsgemäßen Vorrichtung zur Lagerung nochmals erhöht werden kann.

In der erfindungsgemäßen Ausführungsform weist der Bremsbelagträger einen Aufnahmebereich auf, um den Lagerkörper zumindest teilweise darin aufzunehmen. Der Aufnahmebereich des Bremsbelagträgers kann hierbei besonders zweckmäßigerweise separat vom Bremsbelagträger ausgebildet sein und einen Endbereich bzw. Endabschnitt des Bremsbelagträgers definieren. So ist es möglich, den Aufnahmebereich aus einem vom Rest des Bremsbelagträgers unterschiedlichen Material, beispielsweise als Schmiedeteil, auszubilden. Der Lagerkörper ist zumindest teilweise in dem Aufnahmebereich angeordnet. Da die Befestigung des Lagerkörpers über dessen an Stirnseiten vorgesehenen Befestigungsbereichen vorgesehen ist, ist es - anders als bei einem als Kugel ausgebildeten Lagerkörper - nicht mehr notwendig, den Lagerkörper entlang seiner Lagerfläche um mehr als 180° zu umgreifen. Vielmehr ist es bevorzugt, wenn der Aufnahmebereich des Bremsbelagträgers die Lagerfläche des Lagerkörpers um weniger als 180° umgreift, was die Montage des Lagerkörpers am Bremsbelagträger erleichtert.

Vorzugsweise weist der Aufnahmebereich des Bremsbelagträgers Befestigungsabschnitte auf, um mit den Befestigungsbereichen des Lagerkörpers in Eingriff zu gelangen. Die Befestigungsabschnitte des Bremsbelagträgers können als Vorsprünge ausgebildet sein, die in Vertiefungen von entsprechend konkav ausgebildeten Stirnseiten des Lagerkörpers eingreifen. Hierdurch wird der Lagerkörper relativ zum Bremsbelagträger im Wesentlichen ortsfest angeordnet bzw. befestigt. Die Anordnung kann derart erfolgen, dass der Lagerkörper am Bremsbelagträger fest oder alternativ rotierbar angeordnet ist.

In einer weiteren bevorzugten Ausführungsform weist der Bremsträger einen Aufnahmebereich auf, um den Lagerkörper zumindest teilweise darin aufzunehmen. Der Aufnahmebereich des Bremsträgers kann hierbei besonders zweckmäßigerweise separat vom Bremsträger ausgebildet sein und einen Endbereich bzw. Endabschnitt des Bremsträgers definieren. So ist es möglich, den Aufnahmebereich aus einem vom Rest des Bremsträgers unterschiedlichen Material, beispielsweise als Schmiedeteil, auszubilden. Der Lagerkörper ist zumindest teilweise in dem Aufnahmebereich angeordnet. Da die Befestigung des Lagerkörpers über dessen an Stirnseiten vorgesehenen Befestigungsbereichen vorgesehen ist, ist es - anders als bei einem als Kugel ausgebildeten Lagerkörper - nicht mehr notwendig, den Lagerkörper entlang seiner Lagerfläche um mehr als 180° zu umgreifen. Vielmehr ist es bevorzugt, wenn der Aufnahmebereich des Bremsträgers die Lagerfläche des Lagerkörpers um weniger als 180° umgreift, was die Montage des Lagerkörpers am Bremsträger erleichtert.

Bevorzugt weist der Aufnahmebereich des Bremsträgers Befestigungsabschnitte auf, um mit den Befestigungsbereichen des Lagerkörpers in Eingriff zu gelangen. Die Befestigungsabschnitte des Bremsträgers können als Vorsprünge ausgebildet sein, die in Vertiefungen von entsprechend konkav ausgebildeten Stirnseiten des Lagerkörpers eingreifen. Hierdurch wird der Lagerkörper relativ zum Bremsträger im Wesentlichen ortsfest angeordnet bzw. befestigt. Die Anordnung kann derart erfolgen, dass der Lagerkörper am Bremsträger fest oder alternativ rotierbar angeordnet ist.

Vorteilhafterweise läuft die Krümmung des Aufnahmebereichs des Bremsträgers und/oder Bremsbelagträgers in zwei den Lagerkörper zumindest teilweise umgreifenden Vorsprüngen aus. In anderen Worten kann eine Konfiguration vorgesehen sein, in welcher der Lagerkörper über im Bremsbelagträger vorgesehene Befestigungsabschnitte befestigt ist, sodass die Krümmung des Aufnahmebereichs des Bremsträgers in zwei den Lagerkörper zumindest teilweise (lose) umgreifenden Vorsprüngen ausläuft. Entsprechend kann bei einer Konfiguration, in welcher der Lagerkörper über Befestigungsabschnitte des Bremsträgers befestigt ist, in einem Aufnahmebereich des Bremsbelagträgers angeordnet sein, dessen Krümmung in zwei den Lagerkörper (lose) umgreifenden Vorsprüngen ausläuft. Die Vorsprünge sind hierbei derart ausgestaltet, dass diese ab einer bestimmten Neigung der Schwenkebene zum Bremsträger bzw. einem deutlichen Verkippen des Bremsträgers mit dem Lagerkörper in Eingriff gelangen und somit ein weiteres Neigen bzw. Verkippen verhindern. Hierdurch wird die Montage der Trommelbremse zusätzlich vereinfacht.

Weitere Vorteile und Merkmale der vorliegenden Erfindung ergeben sich aus der nachfolgenden Beschreibung von bevorzugten Ausführungsformen mit Bezug auf die beigefügten Figuren, wobei einzelne Merkmale von Ausführungsformen zu neuen Ausführungsformen kombiniert werden können. Es zeigen:
- Fig. 1: eine teilweise geschnittene perspektivische Ansicht einer Trommelbremse mit einer bevorzugten Ausführungsform der erfindungsgemäßen Vorrichtung.
- Fig. 2: eine Seitenansicht und eine Querschnittsansicht einer bevorzugten Ausführungsform der erfindungsgemäßen Trommelbremse.
- Fig. 3: eine Seitenansicht und eine Querschnittsansicht einer weiteren bevorzugten Ausführungsform der erfindungsgemäßen Trommelbremse.
- Fig. 4: eine Draufsicht und eine Seitenansicht einer bevorzugten Ausführungsform eines Lagerkörpers der erfindungsgemäßen Trommelbremse.

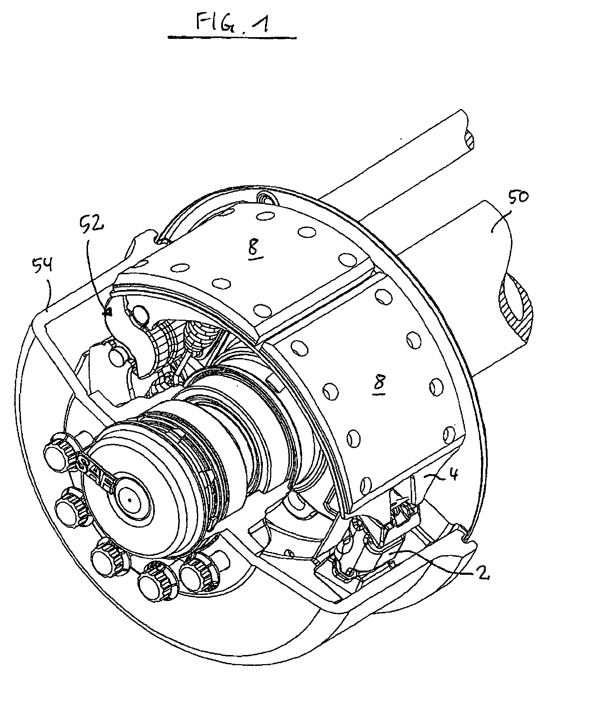

Fig. 1 zeigt eine beispielhafte, bevorzugte Ausführungsform einer Trommelbremse mit der erfindungsgemäßen Vorrichtung zur Lagerung von Bremsbacken. Die Vorrichtung weist einen Bremsträger 2 und einen Bremsbelagträger 4 auf, welcher über zumindest einen Lagerkörper 6 an dem Bremsträger 2 angeordnet ist.

Der Bremsträger 4 ist im Wesentlichen nicht drehbar an einem Achskörper 50 angeordnet, welcher wiederum - bezogen auf den Radmittelpunkt - nicht drehbar mit einem Rahmen des Fahrzeugs verbunden ist. Bei Betätigung des Betätigungsmechanismus 52 wird der an der Außenseite des Bremsbelagträgers 4 angeordnete Bremsbelag gegen die Innenoberfläche der Bremstrommel 54 angedrückt.

Wie ersichtlich, sind zwei Bremsbelagträger 4 vorgesehen, welche im Wesentlichen aus je zwei zueinander parallelen Stegen 10, je einem daran befestigten und die Stege 10 verbindenden Aufnahmebereich 12 und einem Belegblech 14 bestehen, auf dem ein durch Spreizung der Bremsbelagträger 4 gegen die Bremstrommelinnenfläche zur Einleitung des Bremsvorgangs andrückbarer Bremsbelag 8 vorzugsweise auswechselbar angebracht ist.

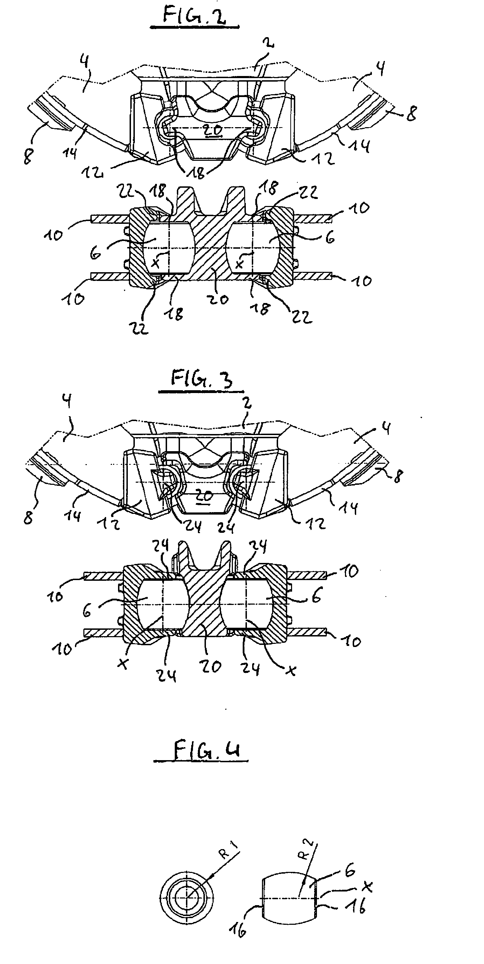

Um eine Verschwenkung des Bremsbelagträgers 4 entlang einer Schwenkebene zu ermöglichen, ist dieser über den Lagerkörper 6 an dem Bremsträger 2 angeordnet. Hierfür kann der Lagerkörper 6 entweder am Bremsträger (Fig. 2) oder am Bremsbelagträger 4 (Fig. 3) angeordnet bzw. befestigt sein.

Der Lagerkörper ist als tonnenförmige Rolle ausgebildet und weist zwei entlang dessen Rotationsachse X im Wesentlichen gegenüberliegende Stirnseiten 16 auf. Die Stirnseiten 16 können vorteilhafterweise konkav ausgebildet sein, sodass sich in den hieraus ergebenden Rücksprung bei der in Fig. 2 dargestellten Ausführungsform ein Befestigungsabschnitt 18 des Aufnahmebereichs 20 des Bremsträgers 2 hineinerstrecken bzw. in Eingriff gelangen kann, um den Lagerkörper 6 am Bremsträger 2 - fest oder vorzugsweise zu diesem rotierbar - festzulegen.

Der Aufnahmebereich 12 des Bremsbelagträgers 4 weist eine Krümmung auf, die in zwei den Lagerkörper 6 zumindest teilweise an dessen Stirnseiten 16 umgreifenden Vorsprüngen 22 ausläuft. Hierdurch wird aufgrund des Eingriffs zwischen Vorsprung 22 und Lagerkörper 6 eine über das zulässige Maß hinausgehende Verkippen des Bremsbelagträgers 4 verhindert.

In der in Fig. 3 dargestellten Ausführungsform ist der Lagerkörper 6 am Bremsbelagträger 4 - zu diesem rotierbar oder vorzugsweise z. B.aufgrund der Reibung fest - angeordnet. Hierfür weist der Bremsbelagträger 4 an seinem Aufnahmebereich 12 Befestigungsabschnitte 24 auf, die mit an Stirnseiten 16 des Lagerkörpers 6 vorgesehenen Befestigungsbereichen in Eingriff stehen.

In Fig. 4 ist eine bevorzugte, beispielhafte Ausführungsform eines Lagerkörpers 6 einer erfindungsgemäßen Trommelbremse vorgesehen. Der Lagerkörper 6 ist als Tonnenkörper ausgebildet und weist zweckmäßigerweise eine Lagerfläche auf, deren Schwenkradius R1 kleiner als der Ballungsradius R2 ist. Hierdurch wird besonders vorteilhafterweise die Flächenpressung zwischen Lagerkörper 6 und den angrenzenden Elementen verringert.

### BEZUGSZEICHENLISTE

| | |
|---|---|
| 2 | Bremsträger |
| 4 | Bremsbelagträger |
| 6 | Lagerkörper |
| 8 | Bremsbelag |
| 10 | Steg |
| 12 | Aufnahmebereich |
| 14 | Belagblech |
| 16 | Stirnseite |
| 18 | Befestigungsabschnitt |
| 20 | Aufnahmebereich |
| 22 | Vorsprung |
| 24 | Befestigungsabschnitt |
| 50 | Achskörper |
| 52 | Betätigungsmechanismus |
| 54 | Bremstrommel |
| X | Rotationsachse |
| R1 | Schwenkradius |
| R2 | Ballungsradius |

## Patentansprüche

1. eine Trommelbremse eines Fahrzeugs, umfassend
einen Bremsträger (2),
einen Bremsbelagträger (4) und
einen Lagerkörper (6),
wobei der Bremsbelagträger (4) über den Lagerkörper (6) derart schwenkbar an dem Bremsträger (2) angeordnet ist, dass der Bremsbelagträger (4) entlang einer Schwenkebene verschwenkbar ist, deren Neigung zum Bremsträger (2) veränderlich ist,
wobei der Lagerkörper (6) eine um dessen Lagerachse (X) rotationssymmetrische Lagerfläche aufweist, **dadurch gekennzeichnet, dass**
Befestigungsbereiche an gegenüberliegenden Stirnseiten (16) des Lagerkörpers (6) vorgesehen sind, um den Lagerkörper (6) zumindest teilweise in einem Aufnahmebereich (12) des Bremsbelagträgers (4) und/oder einem Aufnahmebereich (20) des Bremsträgers (2) aufzunehmen.

2. Trommelbremse nach Anspruch 1, wobei der Lagerkörper (6) als tonnenförmige oder ballige Rolle ausgebildet ist.

3. Trommelbremse nach einem der vorhergehenden Ansprüche, wobei die Lagerfläche des Lagerkörpers (6) eine im Wesentlichen konstante Krümmung aufweist.

4. Trommelbremse nach einem der Ansprüche 1 oder 2, wobei die Lagerfläche des Lagerkörpers (6) einen Schwenkradius (R1) aufweist, der vom Ballungsradius (R2) der Lagerfläche verschieden ist.

5. Trommelbremse nach Anspruch 4, wobei die Lagerfläche des Lagerkörpers (6) einen Schwenkradius (R1) aufweist, der kleiner als der Ballungsradius (R2) der Lagerfläche ist.

6. Trommelbremse nach Anspruch 5, wobei das Verhältnis Ballungsradius (R2) zu Schwenkradius (R1) der Lagerfläche des Lagerkörpers (6) zwischen etwa 0,1 bis 0,9, vorzugsweise etwa 0,4 bis 0,6 und besonders bevorzugt etwa 0,5 liegt.

7. Trommelbremse nach einem der vorhergehenden Ansprüche, wobei der Aufnahmebereich (12) des Bremsbelagträgers (4) Befestigungsabschnitte (24) aufweist, um mit den Befestigungsbereichen des Lagerkörpers (6) in Eingriff zu gelangen.

8. Trommelbremse nach einem der vorhergehenden Ansprüche, wobei der Aufnahmebereich (20) des Bremsträgers (2) Befestigungsabschnitte (18) aufweist, um mit den Befestigungsbereichen des Lagerkörpers (6) in Eingriff zu gelangen.

9. Trommelbremse nach einem der vorhergehenden Ansprüche, wobei die Krümmung des Aufnahmebereichs (12; 20) des Bremsbelagträgers (4) und/oder Bremsträgers (2) in zwei den Lagerkörper (6) zumindest teilweise umgreifenden Vorsprüngen (22) ausläuft.

## Claims

1. A drum brake of a vehicle, comprising
a brake carrier (2),
a brake lining carrier (4), and
a bearing body (6),
wherein the brake lining carrier (4) is arranged on the brake carrier (2) so as to be swivelable across the bearing body (6) in such a way that the brake lining carrier (4) can be pivoted along a plane of swiveling, the inclination of said plane of swiveling to the brake carrier (2) being variable,
wherein the bearing body (6) has a bearing surface which is rotation-symmetrical about its bearing axis (X),
**characterized in that** there are provided fastening portions at oppositely arranged front faces (16) of the bearing body (6) for accommodating the bearing body (6) at least partially in a receiving portion (12) of the brake lining carrier (4) and/or in a receiving portion (20) of the brake carrier (2).

2. The drum brake according to claim 1, wherein the bearing body (6) is designed as a barrel-shaped or spherical roll.

3. The drum brake according to any one of the preceding claims, wherein the bearing surface of the bearing body (6) has an essentially constant curvature.

4. The drum brake according to any one of claims 1 or 2, wherein the bearing surface of the bearing body (6) has a radius of swiveling (R1) which differs from the spherical radius (R2) of the bearing surface.

5. The drum brake according to claim 4, wherein the bearing surface of the bearing body (6) has a radius of swiveling (R1) which is smaller than the spherical radius (R2) of the bearing surface.

6. The drum brake according to claim 5, wherein the relationship of spherical radius (R2) to radius of swiveling (R1) of the bearing surface of the bearing body (6) is between about 0.1 to 0.9, preferably about 0.4 to 0.6, and particularly preferably about 0.5.

7. The drum brake according to any one of the preceding claims, wherein the receiving portion (12) of the brake lining carrier (4) comprises fastening sections (24) so as to come into engagement with the fastening portions of the bearing body (6).

8. The drum brake according to any one of the preceding claims, wherein the receiving portion (20) of the brake carrier (2) comprises fastening sections (18) so as to come into engagement with the fastening portions of the bearing body (6).

9. The drum brake according to any one of the preceding claims, wherein the curvature of the receiving portion (12; 20) of the brake lining carrier (4) and/or of the brake carrier (2) ends in two projections (22) which at least partially encompass the bearing body (6).

## Revendications

1. Frein à tambour d'un véhicule automobile, comprenant
un support de frein (2),
un support de garniture de frein (4) et
un corps de montage (6),
dans lequel le support de garniture de frein (4) est agencé sur le support de frein (2) au moyen du corps de montage (6) avec possibilité de pivotement de telle façon que le support de garniture de frein (4) est capable de pivoter le long d'un plan de pivotement dont l'inclinaison par rapport au support de frein (2) est variable,
dans lequel le corps de montage (6) comporte une surface de montage à symétrie de révolution autour de son axe de montage (X),
**caractérisé en ce que**
il est prévu des zones de fixation sur des côtés frontaux opposés (16) du corps de montage (6), afin de recevoir le corps de montage (6) au moins partiellement dans une zone de réception (12) du support de garniture de frein (4) et/ou une zone de réception (20) du support de frein (2).

2. Frein à tambour selon la revendication 1, dans lequel le corps de montage (6) est réalisé comme un rouleau en forme de tonneau ou en forme bombée.

3. Frein à tambour selon l'une des revendications précédentes, dans lequel la surface de montage du corps de montage (6) présente une courbure sensiblement constante.

4. Frein à tambour selon l'une des revendications 1 ou 2, dans lequel la surface de montage du corps de montage (6) présente un rayon de pivotement (R1) qui est différent du rayon de bombement (R2) de la surface de montage.

5. Frein à tambour selon la revendication 4, dans lequel la surface de montage du corps de montage (6) présente un rayon de pivotement (R1) qui est plus petit que le rayon de bombement (R2) de la surface de montage.

6. Frein à tambour selon la revendication 5, dans lequel le rapport du rayon de bombement (R2) sur le rayon de pivotement (R1) de la surface de montage du corps de montage (6) est compris entre environ 0,1 à 0,9, de préférence environ 0,4 à 0,6, et de manière particulièrement préférée environ 0,5.

7. Frein à tambour selon l'une des revendications précédentes, dans lequel la zone de réception (12) du support de garniture de frein (4) comprend des tronçons de fixation (24) afin de venir en engagement avec les zones de fixation du corps de montage (6).

8. Frein à tambour selon l'une des revendications précédentes, dans lequel la zone de réception (20) du support de frein (2) comprend des tronçons de fixation (18) afin de venir en engagement avec les zones de fixation du corps de montage (6).

9. Frein à tambour selon l'une des revendications précédentes, dans lequel la courbure de la zone de réception (12 ; 20) du support de garniture de frein (4) et/ou du support de frein (2) se termine en deux saillies (22) qui enserrent au moins partiellement le corps de montage (6).
